# EUROPEAN PATENT SPECIFICATION

(11) **EP 3 528 241 B1**
(45) Date of publication and mention of the grant of the patent: **20.01.2021**
(21) Application number: 18157570.5
(22) Date of filing: 20.02.2018
(51) Int. Cl.: G10K 11/178

(54) **NOISE REDUCTION DEVICE, NOISE REDUCTION SYSTEM, AND NOISE REDUCTION CONTROL METHOD**
RAUSCHMINDERUNGSVORRICHTUNG, RAUSCHMINDERUNGSSYSTEM UND RAUSCHMINDERUNGSSTEUERUNGSVERFAHREN
DISPOSITIF DE RÉDUCTION DU BRUIT, SYSTÈME DE RÉDUCTION DU BRUIT ET PROCÉDÉ DE COMMANDE DE RÉDUCTION DU BRUIT

(43) Date of publication of application: 21.08.2019
(73) Proprietor: Panasonic Intellectual Property Management Co., Ltd., Osaka-shi, Osaka 540-6207 (JP)
(72) Inventor: YAMAGUCHI, Takahiro, Osaka-shi, Osaka 540-6207 (JP); EZAKI, Toshihiro, Osaka-shi, Osaka 540-6207 (JP)
(74) Representative: Grünecker Patent- und Rechtsanwälte PartG mbB

(56) References cited:
- EP-A1- 0 724 762
- EP-A1- 2 996 111
- EP-A2- 2 715 719
- US-A1- 2010 150 367
- US-A1- 2013 208 906
- US-A1- 2017 186 417
- US-B2- 9 226 066
- US-B2- 9 595 251

## Description

The present disclosure relates to a noise reduction device, a noise reduction system, and a noise reduction control method in a given space, for example, a noise reduction device, a noise reduction system, and a noise reduction control method for use inside closed structure bodies such as aircraft and railway vehicles.

For example, US Patent Application Publication 2010/111317A1 and Japanese Patent Application Laid-open No. H05-333878 discloses a noise reduction device in which a plurality of microphones are arranged around an adjustable (reclinable) seat and a control sound for reducing the noise collected by the microphone is outputted from the speaker. US Patent Application Publication 2017/186417A1 also discloses a technique in which the choice to use/nonuse of a plurality of microphones and speakers is made depending on whether the seat headrest is above or below the center.

In a case where the seat is adjustable, a control point (for example, the proximity of head of the person sitting on the seat), which is the target position of the noise reduction control, changes as the position of the seat changes. Alternatively, there are situations in which a microphone or a speaker is obstructed by other objects placed in front of them or by a part of the seat. In such a case, the functions of the microphone and speaker cannot be sufficiently exerted; thus incapable of obtaining noise reduction effect.

US 2013/208906 A1 relates to a noise reduction system, wherein based on noise and reference microphone signals, the output of speakers is controlled so as to cancel the noise within a given space. Said reference microphone measures residual noise and provides a feedback signal, which is minimized by adapting the output of the speakers.

US 9 595 251 B2, EP 2 715 719 A2, EP 2 996 111 A1, US 2010/150367 A1, US 9 226 066 B2, and EP 0 724 762 A1 each relate to noise reduction systems reducing noise based on measured microphone signals, wherein the control of the noise reduction procedure may be controlled based on certain conditions.

The present disclosure provides a noise reduction device, a noise reduction system, and a noise reduction control method, through which a noise reduction effect is effectively obtained in a given space where a sound field is formed.

The invention is defined by the independent claims. The dependent claims describe advantageous embodiments.

With the noise reduction device, the noise reduction system, and the noise reduction control method according to the present disclosure, a noise reduction effect is effectively obtained in a given space where a sound field is formed.

### BRIEF DESCRIPTION OF THE DRAWINGS

FIG. 1 schematically shows an aircraft as an installation environment for a noise reduction device.
FIG. 2 shows an example of the installation environment for the noise reduction device in an aircraft.
FIG. 3 shows an example of a shell structure to which the noise reduction device is applied.
FIG. 4 schematically shows a configuration of a noise reduction system.
FIG. 5 is a functional block diagram of the noise reduction device.
FIG. 6 is a functional block diagram of a speaker.
FIG. 7 is a functional block diagram of a microphone.
FIG. 8 shows an example of seat information.
FIG. 9 shows an example of information for specifying the reclining state of a seat.
FIG. 10 shows an example of an operation management table of a speaker and a microphone.
FIG. 11 shows an example of a control command from a seat control system.
FIG. 12 shows an example of instruction information in the seat control system.
FIG. 13 shows an example of operating states of a speaker and a microphone, respectively, when the seat is in a bed mode.
FIG. 14 shows a state of the seat to which the operation state of FIG. 13 is applied.
FIG. 15 shows an example of operating states of a speaker and a microphone, respectively, when the seat is in an upright mode.
FIG. 16 shows a state of the seat to which the operation state of FIG. 15 is applied.
FIG. 17 shows an example of operating states of a speaker and a microphone, respectively, when the seat is in a relax mode.
FIG. 18 shows a state of the seat to which the operation state of FIG. 17 is applied.
FIG. 19 is a flowchart illustrating an operation of a seat control system.
FIG. 20 is a flowchart illustrating an operation of a noise reduction system.
FIG. 21 schematically shows a configuration of a noise reduction system according to a modified example.
FIG. 22 is a functional block diagram of a noise reduction device according to a modified example.
FIG. 23 is a flowchart illustrating an operation of a noise reduction system according to a modified example.

### DESCRIPTION OF EMBODIMENTS

Hereinafter, detailed descriptions of embodiments will be made with reference to the accompanying drawings deemed appropriate. However, descriptions in more detail than necessary will sometimes be omitted. For example, detailed descriptions of well-known items and duplicative descriptions of substantially the same configuration will sometimes be omitted.

Note that the accompanying drawings and the following descriptions are presented to facilitate fully understanding of the present disclosure by those skilled in the art, and are not intended to impose any limitations on the subject matter described in the appended claims.

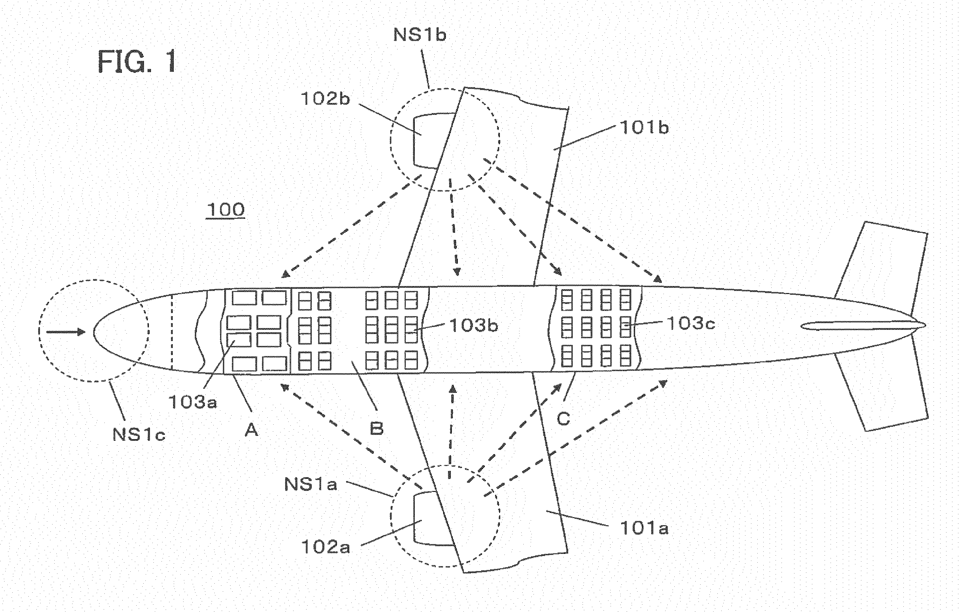

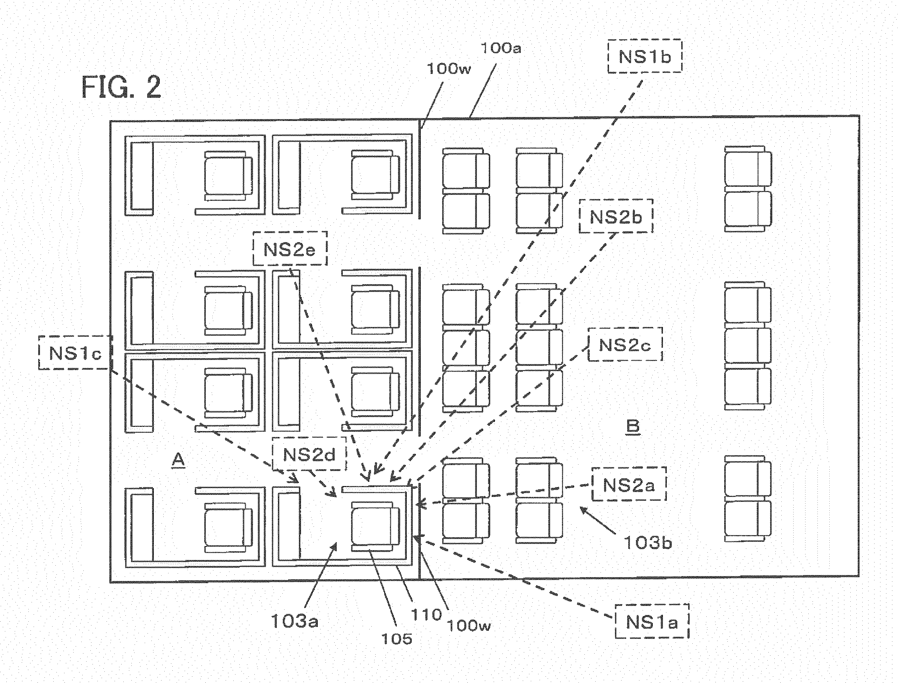

First, a sound environment in aircraft 100 which requires installation of a noise reduction device is described with reference to FIGS. 1 and 2.

FIG. 1 is a plan view illustrating the environment (on the inside of aircraft 100) in which a noise reduction device is installed according to the embodiment.

The aircraft 100 includes, as shown in FIG. 1, left and right wings 101a and 101b, and engines 102a and 102b mounted to wings 101a and 101b, respectively.

Here, in view of the sound environment of the space inside the aircraft 100, sounds emitted from engines 102a and 102b have immense influences as noise sources because they contain sounds associated with reverberations of air streams during a flight as well as rotation sounds.

Engines 102a and 102b act as external noise sources NS1a and NS1b for seat rows 103a, 103b, and 103c which are arranged in, for example, cabin A (e.g. first class), cabin B (e.g. business class), and cabin C (e.g. economy class) of the aircraft, respectively. Moreover, high speed travelling of aircraft 100 entails an air-stream collision noise (wind noise) with the airframe's nose cone, the lateral side walls, and both wings 101a and 101b. Such a collision noise also acts as noise source NS1c for the cabin, resulting in bad influence on information service and the like in the cabin.

In addition, an air conditioning system (not shown) having pressurization, ventilation, and temperature adjustment functions is mounted on the aircraft 100 in order to clean, maintain, and circulate the air inside the aircraft. As shown in FIG. 2, the sound of the air conditioning system exists as a noise source NS2a in addition to the noise sources NS1a, NS1b, and NS1c.

FIG. 2 is a plan view illustrating details of the environment in which the noise reduction device is installed. FIG. 2 shows an enlarged illustration of the seat arrangement in a part of cabins A and B shown in FIG. 1.

Cabin 100a is sectioned by walls 100w into cabins A and B. In cabins A and B, seat rows 103a and 103b are disposed, respectively.

As to the sound environment of cabin 100a, the noise sources NS1a and NS1b generated from engines 102a and 102b, and the wind noise (noise source NSlc) generated at the airframe's nose cone, the lateral side walls, and both wings exist as external noise sources. In addition, noise sources NS2a to NS2e caused by the air conditioning system or the like are present as internal noise sources in cabin 100a.

For example, consider the noise at one seat 105 arranged in cabin A. The seat 105 is influenced by the noises which include ones from noise sources NS1a to NS1c caused by the air stream sound and engines 102a, 102b (see FIG.1) mounted to the wings outside the window, and ones from noise sources NS2a to NS2e caused by the air conditioning system.

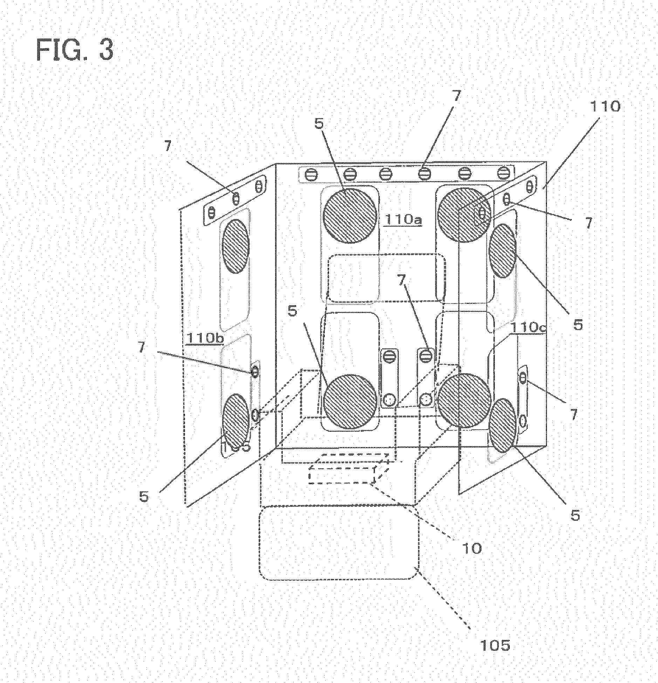

In the first class or the like shown in cabin A in FIG. 1, the seat 105 is surrounded by a shell structure 110 as shown in FIG. 3. The inside of shell structure 110 is equipped with audio-visual appliances such as a television and radio receivers for entertaining a passenger with movies and music, a desk for a business person, a power receptacle for PCs, and so forth, thus forming a sound field. The seat 105 is strongly required to offer a passenger an excellent environment for relaxing comfortably, concentrating on business, etc. For this reason, noise reduction inside the shell structure 110 has been strongly demanded.

In a case where the seat 105 is adjustable, the input and output of the sound for noise reduction changes depending on the reclining state of the seat 105. Therefore, there is a possibility that the noise may not be effectively reduced. Furthermore, the microphones or speakers disposed in the shell structure 110 may be obstructed by objects such as a baggage or a part of the seat; thus the noise may not be effectively reduced. The noise reduction device according to the present disclosure can effectively reduce the noise even if the state of the sound field changes, which is caused by factors such as the reclining state of the seat 105, or the arrangement of objects in the shell structure 110.

Note that the reclining state of the seat 105 includes an inclined state of the backrest of the seat 105 with respect to the seat face. Also, the angle of the seat 105 (hereinafter referred to as the seat angle) includes the angle of the backrest of seat 105 with respect to the seat face.

An example of the seat 105 will be used for explanation in the following description; however the seat 105 does not mean a specific seat.

### First Embodiment

A noise reduction system 1 including a noise reduction device 10 according to a first embodiment of the present disclosure will be described with reference to FIGS. 3 to 20; the description being made using an example of a case where the noise reduction system 1 is installed in an aircraft 100.

As shown in FIG. 3, the seat 105 is disposed inside the wall portion (back wall 110a, side walls 110b and 110c) of the shell structure 110 which is an example of a given space. The seat 105 is adjustable; the seat angle can be adjusted steplessly or in steps from an upright position to the fully-flat position. The noise reduction system 1 is disposed in the seat 105 and in the walls 110a to 110c.

The noise reduction system 1 includes the noise reduction device 10, a speaker 5 which is an example of a control sound output device, and a microphone 7 which is an example of a sound acquisition device. The noise reduction device 10 is installed inside the seat 105, for example, below the seat face. The noise reduction device 10 is connectable to a plurality of speakers 5 and a plurality of microphones 7. The plurality of speakers 5 and microphones 7 are arranged at predetermined positions of the walls 110a to 110c of the shell structure 110 that surrounds the seat 105. Here, the plurality of speakers 5 and microphones 7 being disposed at predetermined positions includes being arranged in the upper and lower part of the shell structure 110.

The plurality of microphones 7, to be described later, are determined to be set as either error microphones or noise microphones according to seat information. The noise microphone is an example of a noise acquisition device, and is a microphone for detecting a sound emitted from a noise source. The error microphone is an example of an error sound acquisition device, and is a microphone for detecting a residual sound (error sound) which is a result of superimposing a control sound emitted from the speaker 5 onto the sound emitted from a noise source. The control sound is a sound signal generated so as to cancel out the noise.

### 1-1 Configuration

The noise reduction system 1 controls both the generation of a control sound and the input/output of sound based on seat information transmitted from a seat control system 3. Specifically, the noise reduction system 1 is formed by the following configuration.

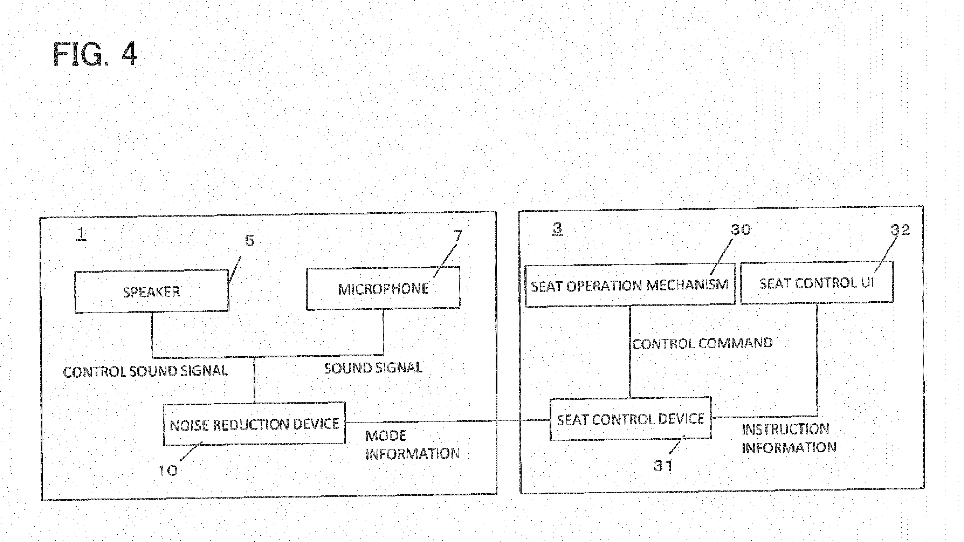

The noise reduction system 1 includes the noise reduction device 10, speakers 5, and microphones 7 as shown in FIG. 4.

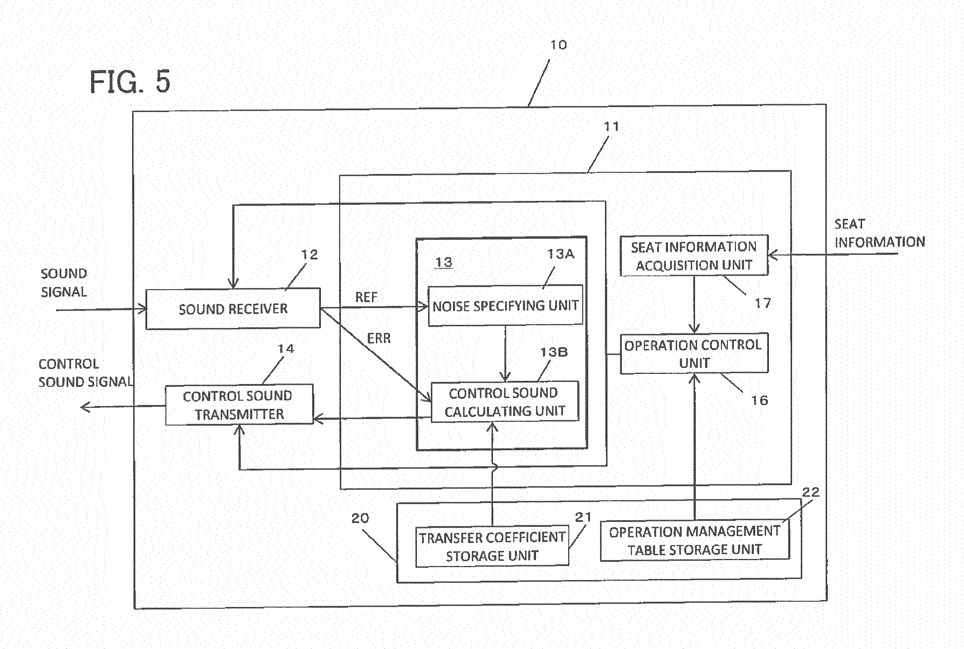

As shown in FIG 5, the noise reduction device 10 includes a processor 11 including a signal processing circuit such as a Digital Signal Processor (DSP), a sound receiver 12 connectable to the respective microphones 7, a control sound transmitter 14 connectable to the respective speakers 5, and a memory 20. The processor 11 includes, for example, a digital filter such as an Finite Impulse Response (FIR) or an adaptive filter for processing the audio signal from the respective microphones 7. The processor 11 processes the digital signal according to a predetermined algorithm, thereby allowing the processor 11 to perform functions of a control sound generating unit 13, an operation control unit 16, and a seat information acquisition unit 17, which will be described later.

The sound receiver 12 receives a sound signal from each of the microphones 7, applies A/D conversion and performs encoding processing on the sound signal. The sound receiver 12 has a number of channels corresponding to the number of microphones 7. Processing by the control sound generating unit 13 of the sound signal received by the sound receiver 12, to be described later, is changed according to an instruction from the operation control unit 16. The sound receiver 12 also switches the input of the sound signal from the respective microphones 7 to ON or OFF according to an instruction from the operation control unit 16, which will be described later.

The control sound generating unit 13 includes a noise specifying unit 13a and a control sound calculating unit 13b.

The noise specifying unit 13a analyzes the frequency of the sound signals from the noise microphones out of the plurality of microphones 7, and specifies the noise signal, which is the frequency band to be canceled out, from out of the sound signals obtained from each noise microphone.

The control sound calculating unit 13b reads a transfer coefficient stored in a transfer coefficient storage unit 21 of the memory 20. The transfer coefficient is a coefficient based on the transfer function from the speaker 5 to the error microphone. The control sound calculating unit 13b generates a control sound signal having an opposite phase to the noise signal advanced by the transfer coefficient. For example, the control sound calculating unit 13b adjusts the filter coefficient of the digital filter so that the error sound from the error microphone among the plurality of microphones 7 is minimized. This adjustment allows the error between the control sound and the noise signal at the control point to be minimized, thereby maintaining the effect of noise reduction.

The control sound transmitter 14 has a number of channels corresponding to the number of speakers 5. With this configuration, the control sound transmitter 14 outputs the control sound signal, which is generated by the control sound generating unit 13, to the respective speakers 5 after D/A conversion. The control sound outputted from the speakers 5 cancels the noise in the proximity of the user on the seat. The control sound transmitter 14, to be described later, switches the output of the sound signal to the respective speakers 5 to ON or OFF according to an instruction from the operation control unit 16.

In accordance with the seat information from the seat control system 3, the operation control unit 16 determines the operation and type of operation for the respective speakers 5 and the respective microphones 7, and issues commands to the sound receiver 12 and the control sound transmitter 14. The switching of operation includes switching the output of the control sound signals to the speakers 5 to ON or OFF, and switching the input of sound signals from the microphones 7 to ON or OFF. The switching of the type of operation includes determining the microphones 7 to be set as noise microphones or error microphones, and causing the control sound generating unit 13 to generate a control sound in accordance with the determination. More specifically, when a sound signal is received from the noise microphone, the sound signal is processed by the noise specifying unit 13a, and then filtered by the control sound calculating unit 13b, so that a control sound signal is generated. When a sound signal is received from the error microphone, the coefficient of the filter is adjusted by the control sound generating unit 13 in order to minimize the sound signal which is the error sound.

The seat information acquisition unit 17 is an example of a detecting unit for detecting a change in the state of a sound field formed in the shell structure 110, and acquires seat information received from the seat control system 3. The seat information will be described later.

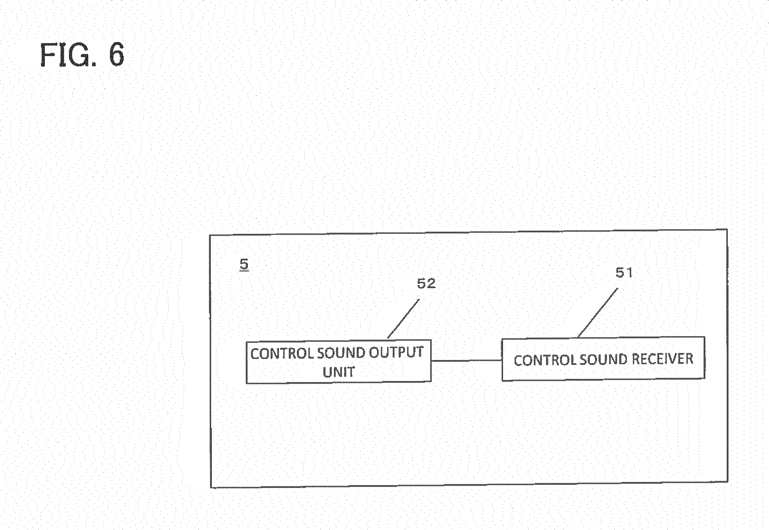

Each of the speakers 5 includes a control sound receiver 51 and a control sound output unit 52 as shown in FIG. 6. The control sound receiver 51 receives the control sound signal transmitted from the noise reduction device 10. The control sound output unit 52 amplifies the control sound and outputs it.

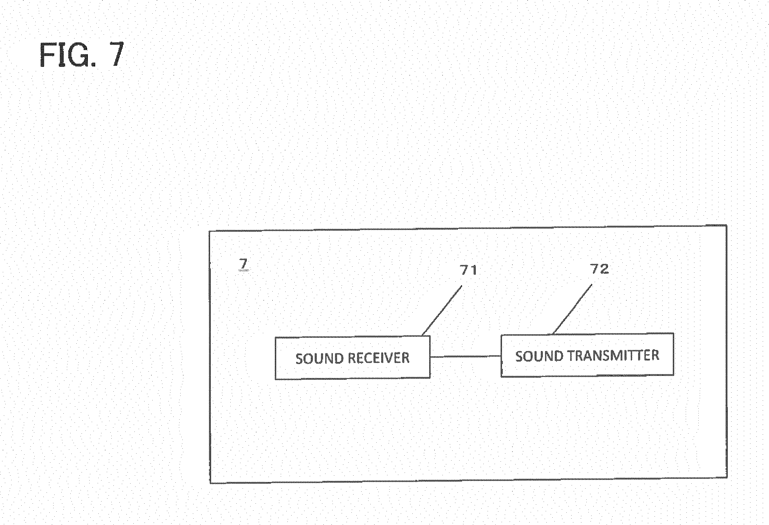

As shown in FIG. 7, each of the microphones 7 includes a sound receiver 71 and a sound transmitter 72. The sound receiver 71 acquires sound from the noise source and the sounds emitted from the respective speakers 5. The sound transmitter 72 converts the sound acquired by the sound receiver 71 into an electric signal, and transmits the electric signal as a sound signal to the noise reduction device 10.

It is to be noted that switching the ON/OFF operation of outputting the control sound signal to the respective speakers 5 and inputting of the sound signal from the respective microphones 7 is not limited to activating and deactivating the input/output of signals by the noise reduction device 10. The noise reduction device 10 may control the ON/OFF of the power of the speakers 5 and the microphones 7.

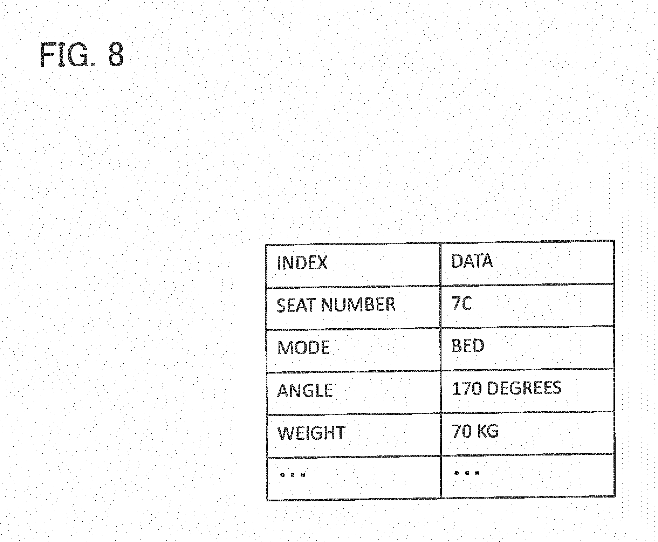

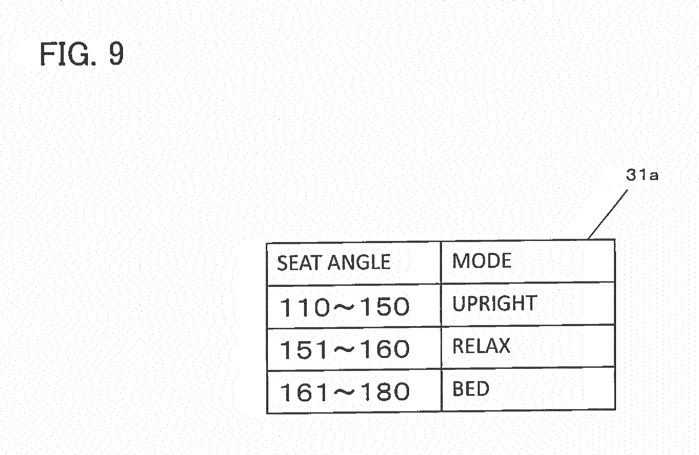

FIG. 8 shows an example of seat information. The seat information includes information specifying the reclining state of the seat. The seat information may include, for example, information such as a seat number, mode information indicating the reclining state of the seat, seat angle, and weight information. The information containing seat angle or mode information is updated every time there is a change to the seat position. FIG. 9 shows the mode information 31a of the seat. For example, the seat has an "upright" mode, a "relax" mode, and a "bed" mode. In the upright mode, the backrest of the seat is substantially upright and the seat angle is, for example, in the range of 110 to 150 degrees. In the bed mode, the backrest of the seat is in a substantially flat state, and the seat angle is, for example, in the range of 161 to 180 degrees. In the relax mode, the backrest of the seat is inclined at an angle between the bed mode and the upright mode, and the seat angle is, for example, in the range of 151 to 160 degrees. Note that the range of the seat angle corresponding to each mode is not limited to this. For instance, the range of the seat angle in the upright mode or the bed mode may be smaller, or the range of the seat angle in the relax mode may be larger.

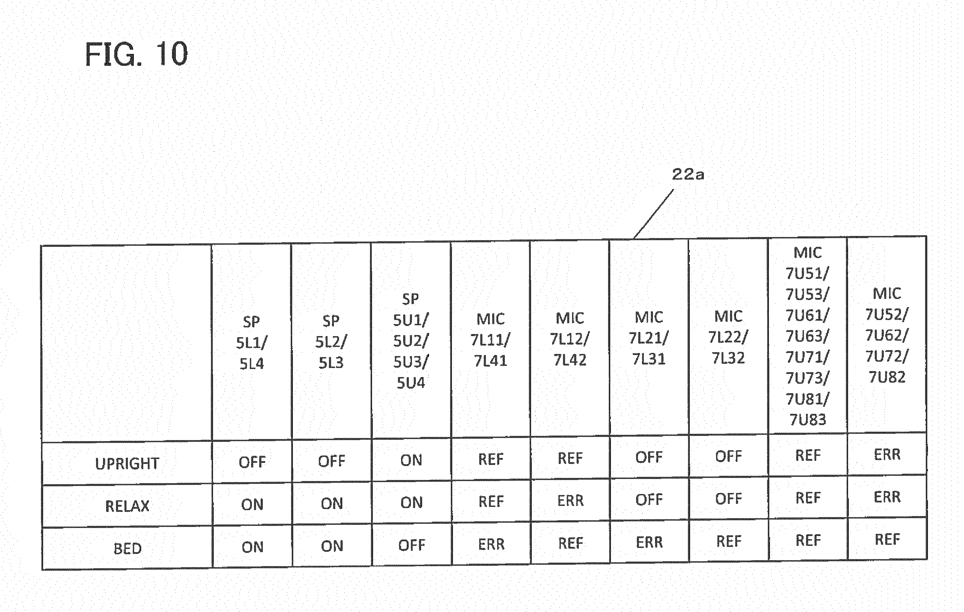

FIG. 10 shows an example of an operation management table referred to by the operation control unit 16. An operation management table 22a is stored in an operation management table storage unit 22 (FIG. 5). Referring to the operation management table 22a based on the seat information, the operation control unit 16 determines the operation and type of operation for the respective speakers 5 and the respective microphones 7. Specifically, the operation control unit 16 switches the output of the speakers 5 and the input of the microphones 7 to ON or OFF according to seat information. In accordance with the seat information, the operation control unit 16 determines whether the microphones 7 will be set as noise microphones or error microphones. Note that in the operation management table 22a, the symbol "REF" indicates a noise microphone and the symbol "ERR" indicates an error microphone.

In the present embodiment, out of the seat information, mode information is used as information for specifying the reclining state of the seat; however, the present disclosure is not limited to this. For example, the operation control unit 16 may directly obtain information on the seat angle and switch the operation and type of operation of the respective speakers 5 and the respective microphones 7 according to the angle. The seat angle may be acquired from an acceleration sensor provided in the seat, for example. Furthermore, information of the seat angle may also be acquired by calculating the seat angle from the change in the weight on the backrest or the seat face based on the weight information for the seat.

Also, the mode information of the seat is not limited to the above, and the number of modes may be more or less than that of the above example. For example, the mode may be only two types: the upright mode and the bed mode.

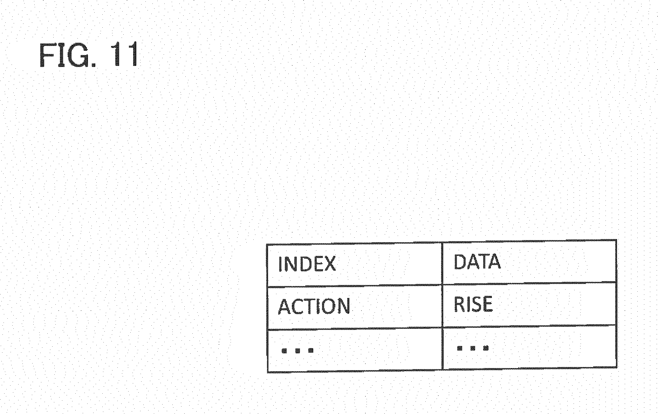

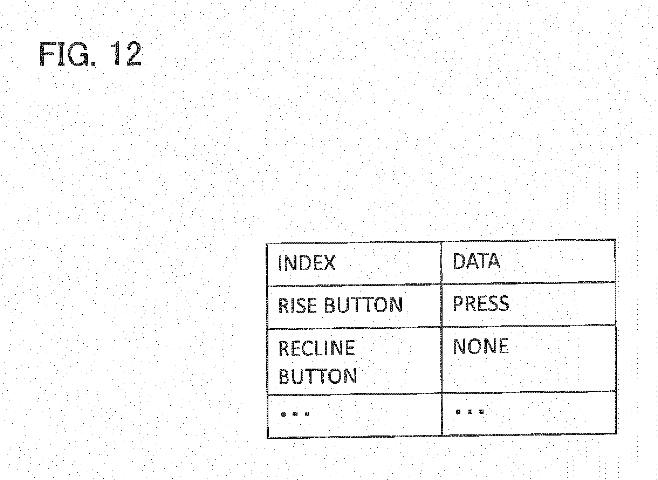

As shown in FIG. 4, the noise reduction system 1 is connectable to the seat control system 3. The seat control system 3 is installed in the seat 105 and includes a seat operation mechanism 30, a seat control device 31, and a seat control user interface (UI) 32. The seat operation mechanism 30 is a mechanism that changes the seat angle of the seat 105 according to a control command from the seat control device 31. The seat control device 31 includes a processor such as a CPU and a memory, and operates according to a predetermined program. The processor may be either single or plural. In response to an instruction information from the seat control UI 32, the seat control device 31 issues a control command to the seat operation mechanism 30. For example, as shown in FIG. 11, the control command indicates the contents of the operation to the seat operation mechanism 30. The seat control device 31 also transmits the seat information corresponding to the instruction information from the seat control UI 32 to the noise reduction system 1. The seat control UI 32 is a part operated by the user, that is, a button, a switch, or a lever for example. The seat control UI 32 may be provided on a display having a touch panel as an operation part. The instruction information issued by the seat control UI 32 is instruction information corresponding to the operation of the various buttons, as shown in FIG. 12, for example.

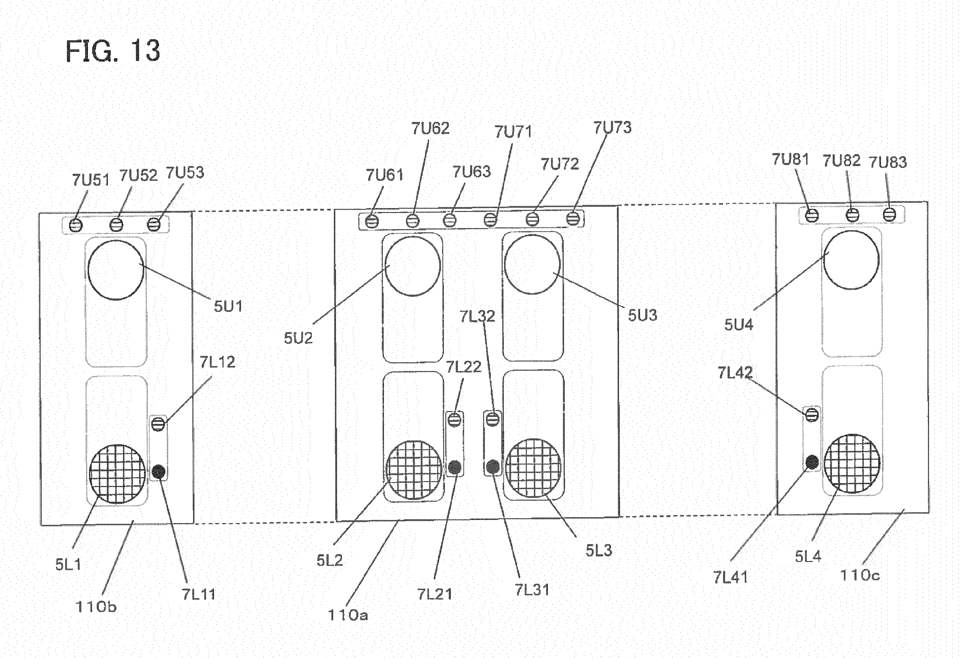

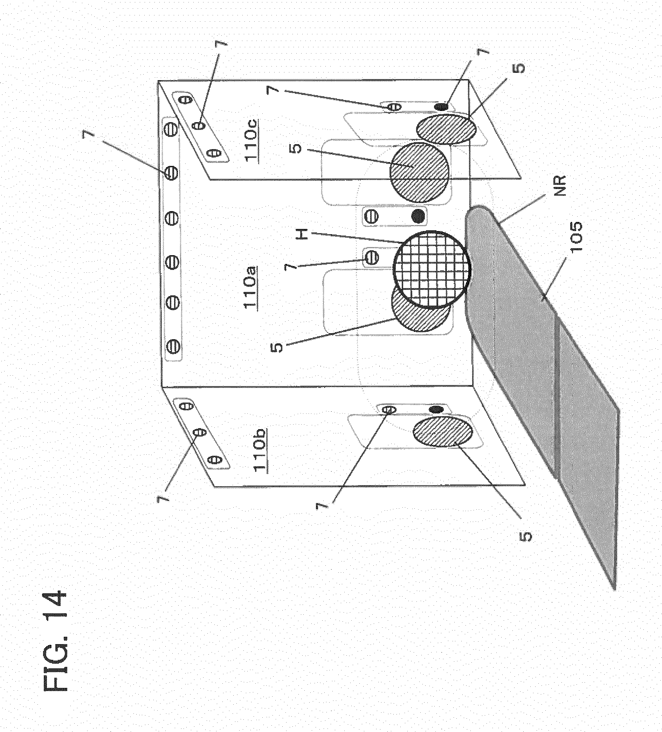

FIG. 13 and FIG. 14 are views schematically showing the operation states of the respective speakers 5 and respective microphones 7 when the seat 105 is in the bed mode according to the operation management table 22a of FIG. 10. When the seat 105 is in the bed mode, the outputs of speakers 5U1, 5U2, 5U3, and 5U4 are switched to OFF, the speakers being disposed in the upper part of walls 110a to 110c of the shell structure 110 surrounding the seat 105. The outputs of speakers 5L1, 5L2, 5L3, and 5L4 disposed in the lower part of the walls 110a to 110c are switched to ON. Microphones 7U51, 7U52, 7U53, 7U61, 7U62, 7U63, 7U71, 7U72, 7U73, 7U81, 7U82, and 7U83 disposed in the upper part of the walls 110a to 110c are set as noise microphones. Likewise, among the microphones 7 arranged vertically and disposed in the lower part of the walls 110a to 110c, the ones at the top, that is, microphones 7L12. 7L22, 7L32, and 7L42 are set as noise microphones. Therefore, the sound signal acquired from these microphones is specified as noise by the noise specifying unit 13a, and then processed by the control sound calculating unit 13b, so that the control sound signal is generated. In contrast, microphones 7L11, 7L21, 7L31, and 7L41 located at the lowermost position are set as error microphones. Therefore, the sound signal acquired from these microphones is regarded as an error sound. In order to minimize the error sound, the coefficient of the filter is adjusted by the control sound calculating unit 13b. In the bed mode, the backrest of the seat 105 becomes nearly flat, and a user's head H, which is the control point, is located at the lower part the shell structure 110. Therefore, the noise is effectively cancelled by the control sound from the speakers 5 the outputs of which are switched to ON. However, since the upper speakers 5U1, 5U2, 5U3, and 5U4 are distant from the control point, the effect of noise reduction is small even when the control sound is outputted from these speakers. Thus, the outputs of these upper speakers 5U1, 5U2, 5U3, and 5U4 are switched to OFF. With this configuration, extra power consumption can be suppressed and adverse influence on the effect of noise reduction can be reduced. Furthermore, the error sound that remains after noise reduction can be effectively acquired by using the microphones 7L11, 7L21, 7L31, and 7L41 located at positions near the control point as error microphones.

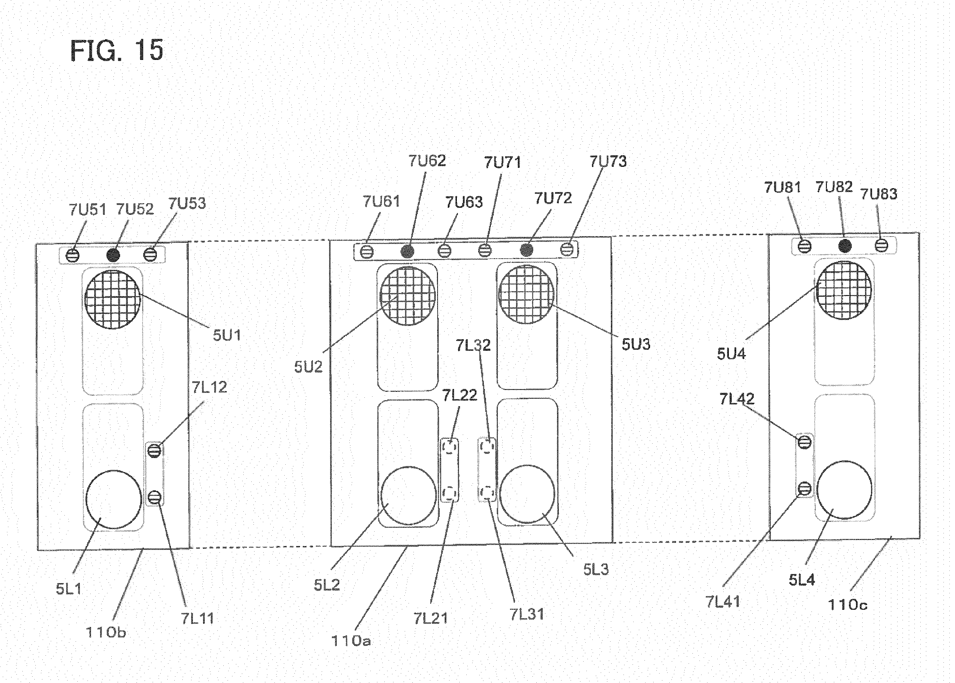

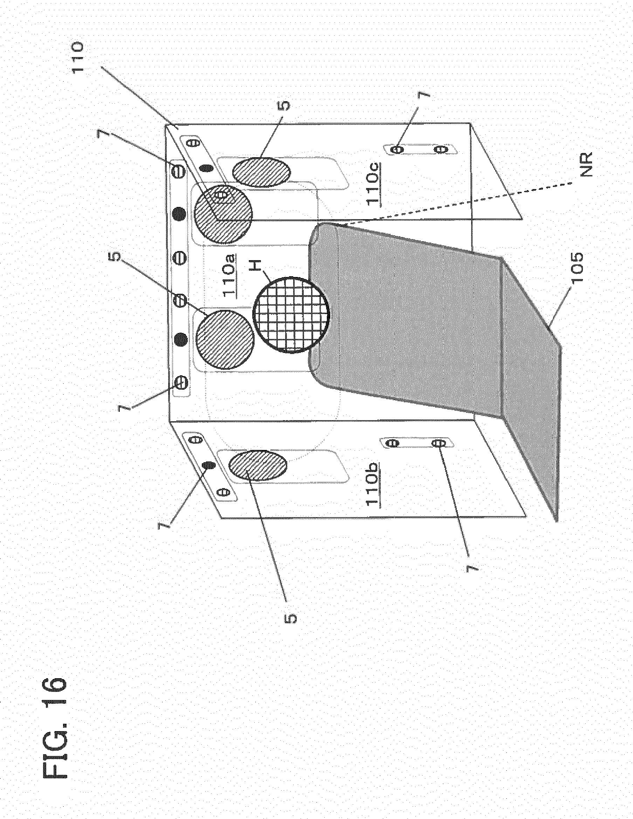

FIG. 15 and FIG. 16 are views schematically showing the operation states of the respective speakers 5 and respective microphones 7 when the seat 105 is in the upright mode according to the operation management table 22a of FIG. 10. When the seat 105 is in the upright mode, the outputs of the speakers 5U1, 5U2, 5U3, and 5U4 disposed in the upper part of the walls 110a to 110c are switched to ON. The outputs of the speakers 5L1, 5L2, 5L3, and 5L4 disposed in the lower part of the walls 110a to 110c are switched to OFF. The microphones 7U51, 7U52, 7U53, 7U61, 7U62, 7U63, 7U71, 7U72, 7U73, 7U81, 7U82, and 7U83 disposed in the upper part of the walls 110a to 110c are alternately set as noise microphones and error microphones. The microphones 7L11, 7L12, 7L41, and 7L42 arranged vertically in the lower part of the side walls 110b and 110c on both sides of the seat 105 are set as noise microphones. The inputs of the microphones 7L21, 7L22, 7L31, and 7L32 arranged vertically in the lower part of the back wall 110a behind the seat 105 are switched to OFF. In the upright mode, the speakers 5U1, 5U2, 5U3, and 5U4 in the upper part of the shell structure 110 are close to the position of the head H of the user, which is the control point. Therefore, the noise is effectively cancelled by the control sound from the speakers 5. However, since the lower speakers 5L1, 5L2, 5L3, and 5L4 are distant from the control point, the effect of noise reduction is small even when the control sound is outputted from these speakers. Thus, the outputs of these lower speakers 5L1, 5L2, 5L3, and 5L4 are switched to OFF. With this configuration, extra power consumption can be suppressed and adverse influence on the effect of noise reduction can be reduced. In addition, the error sound that remains after noise reduction can be effectively acquired by alternately arranging the microphones 7 that are at positions near the control point as noise microphones and error microphones. Moreover, the microphones 7L21, 7L22, 7L31, and 7L32 are located at positions where they may be obstructed by the backrest of the seat and give little noise reduction effect, and the inputs of these microphones are switched to OFF, which allows extra power consumption and adverse influence on noise reduction effect to be suppressed.

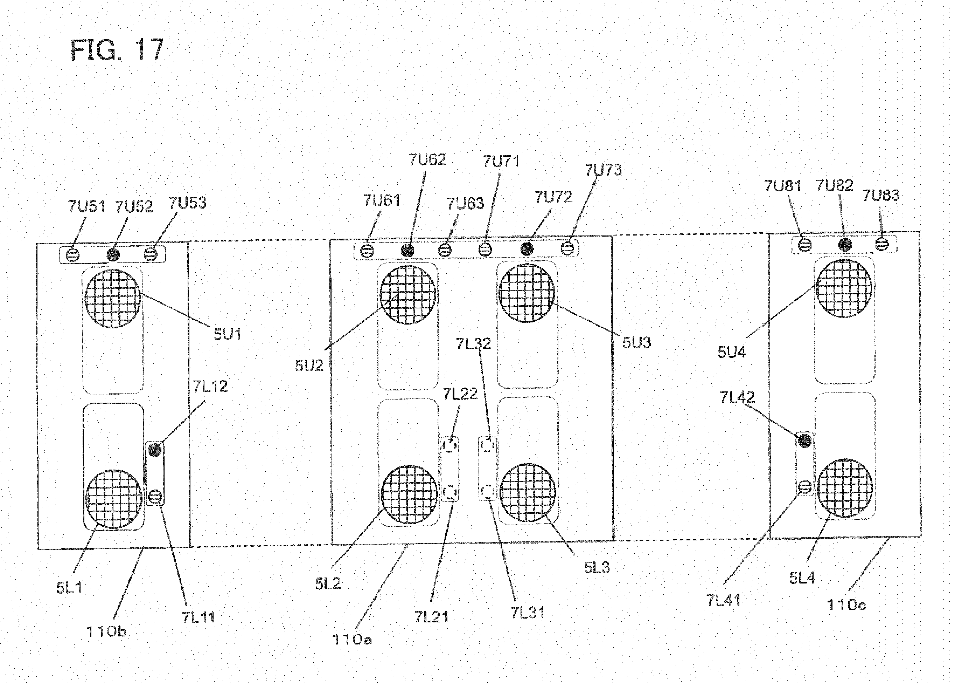

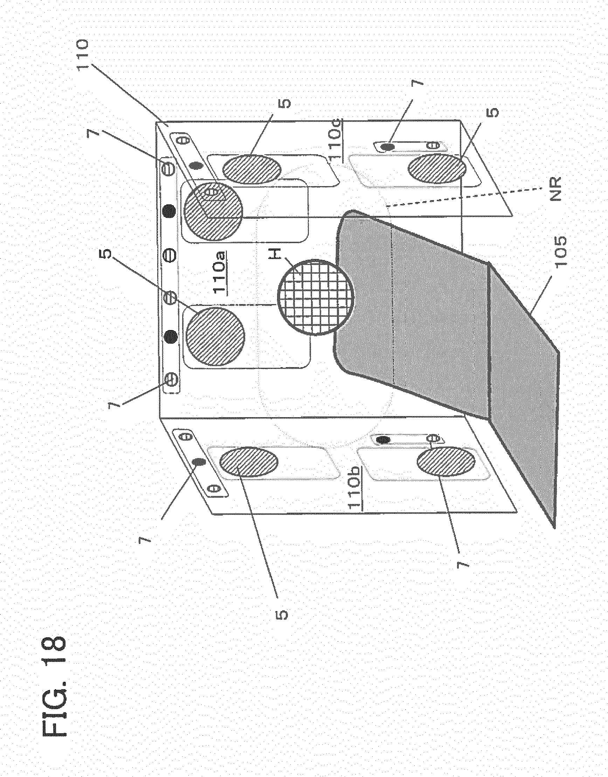

FIG. 17 and FIG. 18 are views schematically showing the operation states of the respective speakers 5 and respective microphones 7 when the seat 105 is in the relax mode according to the operation management table 22a of FIG. 10. When the seat 105 is in the relax mode, the outputs of all the speakers 5U1, 5U2, 5U3, 5U4, 5L1, 5L2, 5L3, and 5L4 disposed in the upper part and lower part of the walls 110a to 110c are switched to ON. The microphones 7U51, 7U52, 7U53, 7U61, 7U62, 7U63, 7U71, 7U72, 7U73, 7U81, 7U82, and 7U83 disposed in the upper part of the walls 110a to 110c are alternately set as noise microphones and error microphones. Of the microphones 7 arranged vertically in the lower part of the side walls 110b and 110c on both sides of the seat 105, the upper microphones 7L12 and 7L42 are set as error microphones whereas the bottom microphones 7L11 and 7L41 are set as noise microphones. The inputs of the microphones 7L21, 7L22, 7L31, and 7L32 arranged vertically in the lower part of the back wall 110a behind the seat 105 are switched to OFF. In the relax mode, the seat 105 is in the state with its seat angle is inclined to 151 to 160 degrees. Given this situation, the head H of the user, which is the control point, is positioned approximately in the middle in the vertical direction of the walls 110a to 110c. Therefore, the outputs of all the speakers 5, which are located above and below the control point, are switched to ON. The microphones 7L12 and 7L42 on the side walls 110b and 110c and located at intermediate positions close to the control point are set as error microphones. The inputs of the microphones 7L21, 7L22, 7L31, and 7L32 on the back wall 110a are switched to OFF since they are almost obstructed by the backrest.

### 1-2 Operation

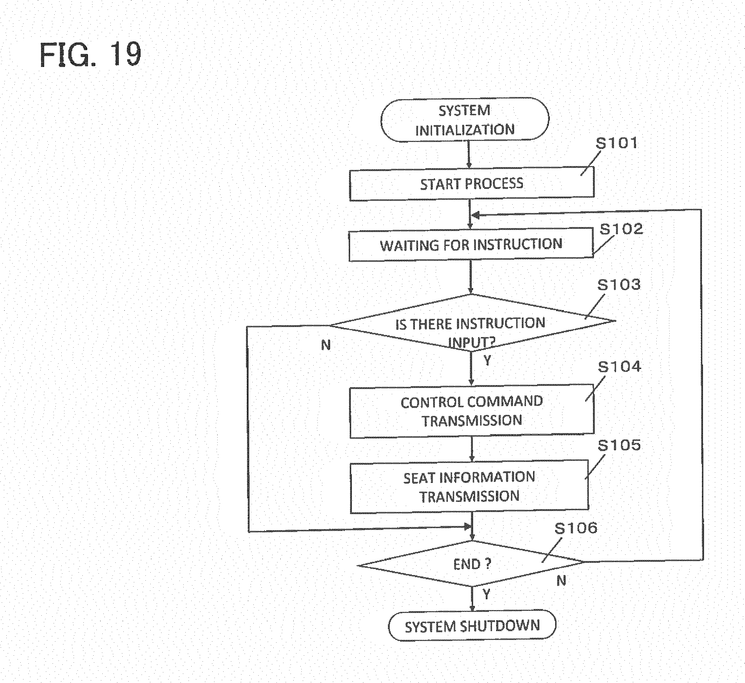

FIG. 19 is a flowchart illustrating an operation of the seat control system 3 according to the present embodiment. First, the seat control system 3 is in the initialization state. This initialization state is, for example, a state immediately after takeoff of the aircraft 100, and the seat 105 is in the upright mode. The seat control device 31 performs the activation processing of the seat control system 3 (S101). The seat control device 31 waits for instruction information from the seat control UI 32 according to the operation of a user (S102). Upon obtaining instruction information from the seat control UI 32 (S103), the seat control device 31 transmits a control command to the seat operation mechanism 30 (S104), thereby changing the reclining state of the seat. The seat control device 31 transmits the seat information to the noise reduction device 10 (S105). Unless the seat control system 3 is terminated (S106), the seat control device 31 repeats the processing of steps S101 to S105.

It is to be noted that the operation of the seat control system 3 is not limited to the procedure of the flowchart shown FIG. 19. Some procedures may be exchanged, or they may be executed in parallel. For example, either the transmission of the control command in step S104 or the transmission of the seat information in step S105 may be performed first or both may be performed in parallel.

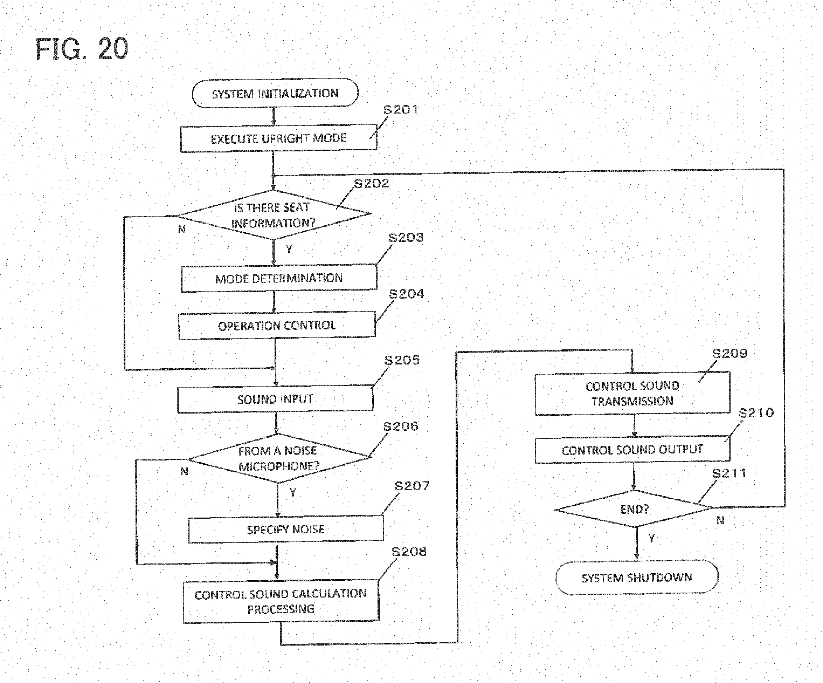

FIG. 20 is a flowchart illustrating an operation of the noise reduction system 1 according to the present embodiment. First, the noise reduction device 10 is in the initialization state. This initialization state is, for example, a state immediately after takeoff of the aircraft, and the seat 105 is in the upright mode. The noise reduction device 10 at this time executes the operation and type of operation of the speakers 5 and microphones 7 according to the upright mode shown in FIG. 10 (S201). When the seat information is obtained from the seat control system 3 (S202), the noise reduction device 10 executes the function of the operation control unit 16 and determines the mode (S203) as shown in FIG. 10. Then, the operation of the respective speakers 5 and the respective microphones 7 is controlled according to the determined mode (S204). Here, controlling the operation includes: switching the output of the control sound signal to the speakers 5 to ON or OFF, switching the input of the sound signal from the microphones 7 to ON or OFF, and determining whether the sound signal from the microphone 7 is from a noise microphone or an error microphone. When a sound signal is inputted from the microphone 7 the input of which is switched to ON (S205), the operation control unit 16 determines whether the inputted sound signal is from a noise microphone or from an error microphone (S206). When it is from a noise microphone, the noise specifying unit 13a performs the above-described processing (S207) and then the control sound calculating unit 13b performs the above-described processing (S208). In contrast, in step S206, when the sound signal is from an error microphone, control sound calculation processing including adjustment of the filter coefficient is performed. In the control sound calculation processing, a control sound signal having the opposite phase to the sound signal is generated based on the sound signal which is the noise signal acquired from the noise microphone, and based on the error sound signal which is acquired from the error microphone. The noise reduction device 10 outputs the control sound signal to the speaker 5, the output of which is switched to ON, by the control sound transmitter 14 (S209). Then, the speaker 5, the output of which is switched to ON, outputs a control sound (S210). Unless the processing of the noise reduction device 10 is terminated (S211), the noise reduction device 10 repeats the processing of steps S202 to S211.

It is to be noted that the operation of the noise reduction system 1 is not limited to the procedure of the flowchart shown FIG. 20. Some procedures may be exchanged, or they may be executed in parallel. For example, the procedures from the sound signal input to the control sound output in steps S205 to S210 may be executed in parallel with the procedures of mode determination and operation control based on the seat information in steps S202 to S204.

### 1-3 Characteristics

The noise reduction device 10 according to the present disclosure dynamically determines the operation type of the microphone 7 based on seat information, whereby the control sound generating unit 13 generates a control sound in accordance with this determination. Therefore, even if the position of the control point changes due to the change in the reclining state of the seat, the microphone 7 close to the control point can be set as the error microphone, resulting in the enhancement of the noise reduction effect. Furthermore, unlike the prior art, the position of the error microphone can be dynamically changed, which allows the noise reduction effect to be maintained without installing an error microphone in the seat.

The noise reduction device 10 also switches the operation of the microphone 7 based on the seat information. Therefore, even if the seat is raised and its backrest covers the microphone 7 and sound transmission failure occurs, the noise reduction effect can be maintained by switching the reception of the sound signal from the microphone 7 to OFF. In addition, a microphone with a low noise reduction effect is not used, and thereby extra power consumption and adverse influence on noise reduction effect can be suppressed.

The noise reduction device 10 further switches the operation of the speaker 5 based on the seat information. Therefore, even if the position of the control point changes due to the change in the reclining state of the seat, the output to the speaker 5 close to the control point is switched to ON and the output of the speaker 5 at a distance from the control point is switched to OFF. With this configuration, extra power consumption and adverse influence on the noise reduction effect can both be suppressed.

### 1-4. Modification Example

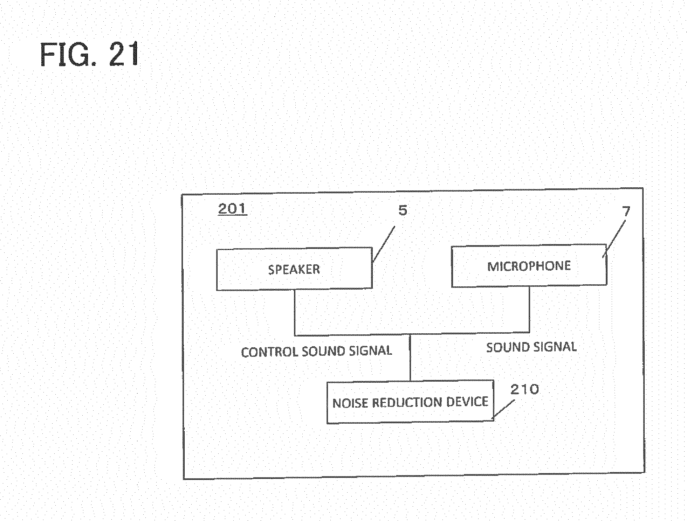

A noise reduction device 210 according to a modified example will be described with reference to FIGS. 21 to 23. In the noise reduction device 210, a change in the state of the sound field formed in the shell structure 110 is detected by a change in a received sound signal. This point makes the noise reduction device 210 different from that of the aforesaid embodiment. Hereinafter, differences from the aforesaid embodiment will be mainly described.

The microphone 7 and the speaker 5 do not function properly when the microphone 7 and speaker 5 are being obstructed by a part of the seat or other objects, which causes a decrease in the correlation between noise and a control sound, thereby a reduced noise reduction effect. Given this situation, the noise reduction device 210 according to the present modification prevents the noise reduction effect from being reduced.

As shown in FIG. 21, a noise reduction system 201 includes the noise reduction device 210, the speakers 5, and the microphones 7.

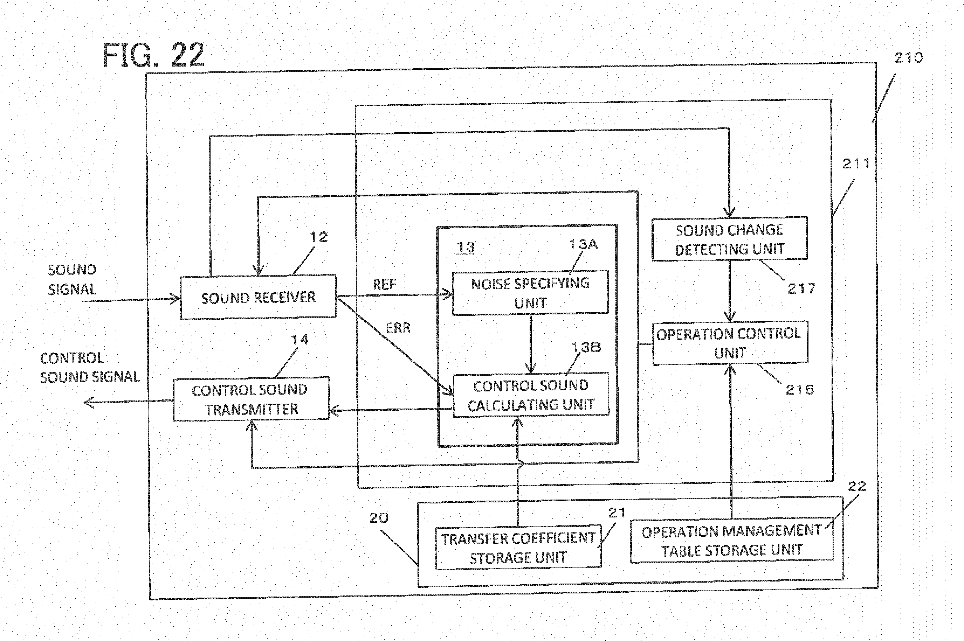

As shown in FIG. 22, the noise reduction device 210 includes a processor 211 including a signal processing circuit such as a Digital Signal Processor (DSP), the sound receiver 12 connectable to the respective microphones 7, the control sound transmitter 14 connectable to the respective speakers 5, and the memory 20. The processor 211 has a similar configuration as the aforesaid embodiment, but differs in that it executes the function of a sound change detecting unit 217. The sound change detecting unit 217 is an example of a detecting unit for detecting a change in the state of the sound field formed in the shell structure 110.

The sound change detecting unit 217 monitors sound signals received from the respective microphones 7 and detects changes in the received sound signals. The change in the received sound signal means, for example, that the intensity change or the noise reduction width of a sound signal from a specific microphone 7 is different from the intensity change or the noise reduction width of a sound signal from the other microphone 7; or that the relevant sound signal is smaller than the reference level of the sound signal from the specific microphone 7 which is acquired in advance. Furthermore, when a specific speaker 5 is obstructed by a part of the seat or other objects, a change occurs in the input sound of the error microphone that is close to the specific speaker 5 out of the plurality of error microphones. That is, the input sound becomes smaller, compared with the ones of the other error microphone and this change is detected by the sound change detecting unit 217.

Referring to a predetermined table stored in the operation management table storage unit 22, an operation control unit 216 determines the operation and the type of operation of the respective speakers 5 and respective microphones 7. The predetermined table includes conditions for determining the operation and type of operation for the speaker 5 and microphone 7 (for example, a reference level of the sound signal, the degree of intensity change of the sound signal, the width of noise reduction, the duration of change, etc. are conditions for the determination). The operation control unit 216 determines the operation and the type of operation of the speaker 5 or the microphone 7 according to this condition, and issues commands to the sound receiver 12 and the control sound transmitter 14. For example, the operation control unit 216 switches OFF the input of the sound signal from a microphone 7 specified on the basis of the detection by the sound change detecting unit 217. The operation control unit 216 also switches OFF, for example, the output of a speaker 5 specified on the basis of the detection by the sound change detecting unit 217. In the case where, for example, the specific microphone 7 determined based on the detection by the sound change detecting unit 217 is an error microphone, the operation control unit 216 sets the specific microphone 7 as a noise microphone.

Similarly, when the specific microphone 7 or the specific speaker 5 is no longer in a state of being obstructed by a part of the seat or other objects, the sound change detecting unit 217 detects a change in the sound signal that is received. Based on this detection by the sound change detecting unit 217, the operation control unit 216 executes operation control such as switching ON the input of the sound signal from the specific microphone 7, switching ON the output of the specific speaker 5 as well, and setting the noise microphone to an error microphone.

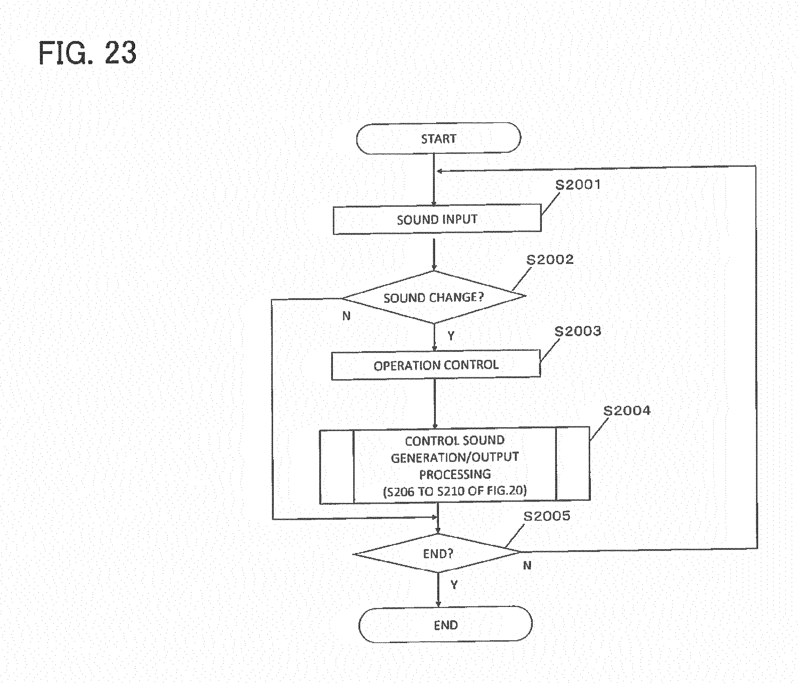

FIG. 23 is a flowchart illustrating an operation of the noise reduction system 201 including the noise reduction device 210 according to the present modified example. Upon input of a sound signal (S2001), the noise reduction device 210 detects whether there is a change in the sound signal as described above (S2002). When a change is detected, the functions of the operation control unit 216 as described above are executed (S2003). Subsequently, control sound generation/output processing in steps S206 to S210 of the flowchart shown in FIG. 20 is executed (S2004). Unless the processing of the noise reduction device 210 is terminated (S2005), the noise reduction device 210 will repeat the processing of steps S2001 to S2004.

The noise reduction device 210 according to the above modified example includes the sound change detecting unit 217 for detecting a change in the sound signal received by the sound receiver 23, and controls the control sound generating unit 13 in generating a control sound signal based on the change in the sound signal, or switches the operation of the microphone 7 or speaker 5. This configuration enables control of the operation of the microphone 7 and the speaker 5 whose functions cannot be exerted normally due to causes such as being obstructed by a part of the seat or other objects. As a result, the correlation between the noise and the control sound can be maintained, thereby keeping the noise reduction effect.

Note that the noise reduction device 210 according to the above modification may include the seat information acquisition unit 17 of the aforementioned embodiment in addition to the sound change detecting unit 217. In this case, switching the operation of the respective speakers 5 and the respective microphones 7, and generating a control sound based on the type of operation are executed based on the seat information in addition to the change in the sound signal.

### (Other Embodiments)

As described above, the above embodiment has been described to exemplify the technology disclosed in the present application. However, the technology is not limited to the embodiment, and is also applicable to embodiments that are subjected, as appropriate, to various changes and modifications, replacements, additions, omissions, and the like. Moreover, the technology disclosed herein also allows another embodiment which is configured by combining the appropriate constituent elements in the embodiment described above.

For example, although the noise reduction system 1 includes the noise reduction device 10, the speakers 5, and the microphones 7, the noise reduction system 1 may further include the seat control system 3.

The arrangement, the number, the operation, and the type of operation of the speakers 5 and the microphones 7 are not limited to the above examples, but may be changed as long as the noise reduction effect can be maintained according to the reclining state of the seat. The number of microphones 7 determined as either error microphones or noise microphones according to a reclining state of a seat or a change of state of the sound field is not limited to the above examples, and may be either single or plural. Likewise, the number of speakers 5 and the number of microphones 7 to be either activated or deactivated according to the reclining state or the change of state of the sound field is not limited to the above examples, and may be either single or plural.

In the embodiment described above, the noise reduction devices 10 and 210 and the noise reduction systems 1 and 201 are taken as examples. However, the present disclosure includes a noise reduction control method executed by such noise reduction devices 10 and 210 or noise reduction systems 1 and 201.

In the embodiment described above, description has been made using the example in which the noise reduction systems 1 and 201 of the present disclosure are installed in the cabin of the aircraft 100. However, the present disclosure is not limited to this. The installation site of the noise reduction systems 1 and 202 is not limited to the cabin of an aircraft. For example, the noise reduction system may be installed in the cockpit of the aircraft, for reducing a burden on the ears of a pilot. Alternatively, the noise reduction system may be installed in vehicles other than aircraft, including helicopters, trains, and buses. Moreover, besides movable bodies such as vehicles, the noise reduction system may be installed in other places including buildings located in the neighborhood of a construction site or a club with live music, etc., which emits a noise.

According to the noise reduction devices 10 and 210, the noise reduction systems 1 and 201, and the noise reduction control method of the present disclosure, it is possible to dynamically optimize the positions of the speakers and microphones for noise reduction in a seat having a shell structure, thereby efficiently obtaining the noise reduction effect.

## Claims

1. A noise reduction device connectable to a plurality of sound acquisition devices (7) and a plurality of control sound output devices (5) for reducing a noise emitted by a noise source in a given space where a sound field can be formed, the noise reduction device comprising:
a sound receiver (12) for receiving a sound signal from at least two of the plurality of sound acquisition devices (7);
a control sound generating unit (13) for generating a control sound signal to reduce noise with respect to the sound signal; and
a control sound transmitter (14) for outputting the control sound signal to each of the control sound output devices (5);
a detecting unit for detecting a state change of the sound field; and
an operation control unit (16) for controlling the generation of the control sound signal by the control sound generating unit (13) based on the change of state of the sound field
**characterized in that**
the operation control unit (16) is configured to determine the at least two of the plurality of sound acquisition devices (7) as either one of a noise acquisition device for acquiring the noise emitted by the noise source or an error sound acquisition device for acquiring an error sound, which is a result of superimposing the control sound signal emitted from the control sound output devices (5) onto the noise emitted from the noise source, based on the change of state of the sound field; and
the control sound generating unit (14) is configured to generate the control sound signal according to the determination.

2. The noise reduction device according to claim 1, wherein
the detecting unit includes a seat information acquisition (17) unit for acquiring seat information that specifies a reclining state of a seat (105) disposed in the given space; and
the operation control unit (16) controls the generation of the control sound signal by the control sound generation (14) unit based on the seat information.

3. The noise reduction device according to claim 1 or 2, wherein
the detecting unit includes a sound change detecting unit (217) for detecting a change in the sound signal received by the sound receiver (12); and
the operation control unit (16) controls the generation of the control sound signal by the control sound generating unit (14) based on the change in the sound signal.

4. The noise reduction device according to claim 1, wherein
the control sound generating unit (14) executes (i) or (ii) according to the determination, wherein (i) specifies a noise signal with respect to the sound signal from the noise acquisition device and generates the control sound signal in accordance with the noise signal, and (ii) performs adjustment to minimize an error between the sound signal acquired from the error sound acquisition device and the control sound signal generated in (i).

5. The noise reduction device according to any one of claims 1 to 4, wherein
the operation control unit (16) switches ON or OFF the reception of the sound signal from at least one of the plurality of sound acquisition devices (7), according to a change of state of the sound field.

6. The noise reduction device according to any one of claims 1 to 5, wherein
the operation control unit (16) switches ON or OFF the output of the control sound signal to at least one of the plurality of control sound output devices (7), according to the change of state of the sound field.

7. The noise reduction device according to claim 2, wherein
the reclining state includes a first state in which a backrest of the seat (105) is substantially flat, and a second state in which the backrest is substantially upright.

8. The noise reduction device according to claim 7, wherein
the reclining state includes a third state in which the backrest of the seat (105) tilts at an angle between the first state and the second state.

9. A noise reduction system, comprising:
the noise reduction device (10) according to any one of claims 1 to 8;
the plurality of sound acquisition devices (7) connectable to the noise reduction device (10); and
the plurality of control sound output devices (5) connectable to the noise reduction device (10).

10. The noise reduction system according to claim 9, wherein
the detecting unit includes a seat information acquisition unit (17) for acquiring seat information that specifies a reclining state of a seat (105); and
the reclining state includes a first state in which a backrest of the seat (105) is substantially flat and the second state in which the backrest is substantially upright.

11. The noise reduction system according to claim 10, wherein
the plurality of sound acquisition devices (7) include one or more first sound acquisition devices disposed in an upper part of the given space, and one or more second sound acquisition devices disposed in a lower part of the given space;
when the reclining state is in the first state, the operation control unit (16) determines at least one of the first sound acquisition devices as a noise acquisition device for acquiring a noise, and determines at least one of the second sound acquisition devices as an error sound acquisition device for acquiring an error sound; and
the control sound generating unit (13) generates the control sound signal according to the determination.

12. The noise reduction system according to claim 10 or 11, wherein
the plurality of sound acquisition devices (7) include one or more first sound acquisition devices disposed in an upper part of the given space, and one or more second sound acquisition devices disposed in a lower part of the given space;
when the reclining state is in the second state, the operation control unit (16) determines at least one of the first sound acquisition devices as an error sound acquisition device for acquiring an error sound, and switches OFF the reception of the sound signal from at least one of the second sound acquisition devices; and
the control sound generating unit (13) generates the control sound signal according to the determination.

13. The noise reduction system according to any one of claims 10 to 12, wherein
the plurality of control sound output devices (5) include one or more first control sound output devices disposed in an upper part of the given space, and one or more second control sound output devices disposed in a lower part of the given space;
when the reclining state is in the first state, the operation control unit (16) switches OFF the output of the control sound signal to the one or more first control sound output devices, and switches ON the output of the control sound signal to the one or more second control sound output devices; and
when the reclining state is in the second state, the operation control unit (16) switches ON the output of the control sound signal to the one or more first control sound output devices, and switches OFF the output of the control sound signal to the one or more second control sound output devices.

14. A noise reduction control method for reducing a noise emitted by a noise source in a given space where a sound field can be formed, comprising:
receiving a sound signal from a plurality of sound acquisition devices (7);
generating a control sound signal for reducing noise with respect to the received sound signal; and
outputting the control sound signal to a plurality of control sound output devices (5);
detecting a change in the state of the sound field; and
generating the control sound signal based on the change of state of the sound field;
**characterized by**
determining the at least two of the plurality of sound acquisition devices (7) as either one of a noise acquisition device for acquiring the noise emitted by the noise source or an error sound acquisition device for acquiring an error sound, which is a result of superimposing the control sound signal emitted from the control sound output devices (5) onto the noise emitted from the noise source, based on the change of state of the sound field; and
generating the control sound signal according to the determination.

## Patentansprüche

1. Rauschminderungsvorrichtung, die mit einer Mehrzahl an Tonerfassungsvorrichtungen (7) und einer Mehrzahl an Steuertonausgabevorrichtungen (5) verbindbar ist, zum Mindern eines Rauschens, das von einer Rauschquelle in einem gegebenen Raum ausgesendet wird, wo ein Schallfeld gebildet werden kann, wobei die Rauschminderungsvorrichtung umfasst:
einen Tonempfänger (12) zum Empfangen eines Tonsignals von mindestens zwei der Mehrzahl an Tonerfassungsvorrichtungen (7);
eine Steuertonerzeugungseinheit (13) zum Erzeugen eines Steuertonsignals, um Rauschen in Bezug auf das Tonsignal zu mindern; und
ein Steuertonüberträger (14) zum Ausgeben des Steuertonsignals zu jedem der Steuertonausgabevorrichtungen (5);
eine Erkennungseinheit zum Erkennen einer Zustandsänderung des Schallfelds; und
eine Betriebssteuereinheit (16) zum Steuern des Erzeugens des Steuertonsignals durch die Steuertonerzeugungseinheit (13), auf Grundlage der Änderung des Zustands des Schallfelds
**dadurch gekennzeichnet, dass**
die Betriebssteuereinheit (16) eingerichtet ist, die mindestens zwei der Mehrzahl an Tonerfassungsvorrichtungen (7) als entweder eine Rauscherfassungsvorrichtung zum Erfassen des von der Rauschquelle ausgesendeten Rauschens oder als eine Fehlertonerfassungsvorrichtung zum Erfassen eines Fehlertons zu bestimmen, der ein Ergebnis des Überlagerns des Steuertonsignals, das von den Steuertonausgabevorrichtungen (5) ausgesendet wird, auf das Rauschen, das von der Rauschquelle ausgesendet wird, ist, auf Grundlage der Änderung des Zustands des Schallfelds; und
die Steuertonerzeugungseinheit (14) eingerichtet ist, das Steuertonsignal entsprechend der Bestimmung zu erzeugen.

2. Rauschminderungsvorrichtung nach Anspruch 1, wobei
die Erkennungseinheit eine Sitzinformationserfassungseinheit (17) enthält, zum Erfassen von Sitzinformation, die einen Zurücklegungszustand eines Sitzes (105) spezifiziert, der in dem gegebenen Raum angeordnet ist; und
die Betriebssteuereinheit (16) die Erzeugung des Steuertonsignals durch die Steuertonerzeugungseinheit (14) steuert, auf Grundlage der Sitzinformation.

3. Rauschminderungsvorrichtung nach Anspruch 1 oder 2, wobei
die Erkennungseinheit eine Tonänderungserkennungseinheit (217) enthält, zum Erkennen einerÄnderung in dem Tonsignal, das von dem Tonempfänger (12) empfangen wird; und
die Betriebssteuereinheit (16) die Erzeugung des Steuertonsignals durch die Steuertonerzeugungseinheit (14) steuert, auf Grundlage der Änderung in dem Tonsignal.

4. Rauschminderungsvorrichtung nach Anspruch 1, wobei
die Steuertonerzeugungseinheit (14) entsprechend der Bestimmung (i) oder (ii) ausführt, wobei (i) ein Tonsignal spezifiziert in Bezug auf das Tonsignal von der Rauscherfassungsvorrichtung und das Steuertonsignal erzeugt entsprechend dem Rauschsignal, und (ii) eine Anpassung durchführt, um einen Fehler zwischen dem Tonsignal, das von der Fehlertonerfassungsvorrichtung erfasst wird, und dem in (i) erzeugten Steuertonsignal zu minimieren.

5. Rauschminderungsvorrichtung nach einem der Ansprüche 1 bis 4, wobei
die Betriebssteuereinheit (16) den Empfang des Tonsignals von mindestens einer der Mehrzahl an Tonerfassungsvorrichtungen (7) AN oder AUS schaltet, entsprechend einer Änderung des Zustands des Schallfelds.

6. Rauschminderungsvorrichtung nach einem der Ansprüche 1 bis 5, wobei die Betriebssteuereinheit (16) die Ausgabe des Steuertonsignals zu mindestens einer der Mehrzahl an Steuertonausgabevorrichtungen (7) AN oder AUS schaltet, entsprechend der Änderung des Zustands des Schallfelds.

7. Rauschminderungsvorrichtung nach Anspruch 2, wobei
der Zurücklegungszustand einen ersten Zustand, in dem eine Rücklehne des Sitzes (105) im Wesentlichen flach ist, und einen zweiten Zustand, in dem die Rücklehne im Wesentlichen aufrecht ist, enthält.

8. Rauschminderungsvorrichtung nach Anspruch 7, wobei
der Zurücklegungszustand einen dritten Zustand enthält, in dem die Rücklehne des Sitzes (105) sich mit einem Winkel zwischen dem ersten Zustand und dem zweiten Zustand neigt.

9. Rauschminderungssystem, umfassend:
die Rauschminderungsvorrichtung (10) nach einem der Ansprüche 1 bis 8;
die Mehrzahl an Tonerfassungsvorrichtungen (7), die mit der Rauschminderungsvorrichtung (10) verbindbar sind; und
die Mehrzahl an Steuertonausgabevorrichtungen (5), die mit der Rauschminderungsvorrichtung (10) verbindbar sind.

10. Rauschminderungssystem nach Anspruch 9, wobei
die Erkennungseinheit eine Sitzinformationserfassungseinheit (17) enthält, zum Erfassen von Sitzinformation, die einen Zurücklegungszustand eines Sitzes (105) spezifiziert; und
der Zurücklegungszustand einen ersten Zustand, in dem eine Rücklehne des Sitzes (105) im Wesentlichen flach ist, und den zweiten Zustand, in dem die Rücklehne im Wesentlichen aufrecht ist, enthält.

11. Rauschminderungssystem nach Anspruch 10, wobei
die Mehrzahl an Tonerfassungsvorrichtungen (7) eine oder mehrere erste Tonerfassungsvorrichtungen, die in einem oberen Teil des gegebenen Raums angeordnet sind, und eine oder mehrere zweite Tonerfassungsvorrichtungen, die in einem unteren Teil des gegebenen Raums angeordnet sind, enthält;
wenn der Zurücklegungszustand in dem ersten Zustand ist, die Betriebssteuereinheit (16) mindestens eine der ersten Tonerfassungsvorrichtungen als eine Rauscherfassungsvorrichtung zum Erfassen eines Rauschens bestimmt, und mindestens eine der zweiten Tonerfassungsvorrichtungen als eine Fehlertonerfassungsvorrichtung zum Erfassen eines Fehlertons bestimmt; und
die Steuertonerzeugungseinheit (13) das Steuertonsignal entsprechend der Bestimmung erzeugt.

12. Rauschminderungssystem nach Anspruch 10 oder 11, wobei
die Mehrzahl an Tonerfassungsvorrichtungen (7) eine oder mehrere erste Tonerfassungsvorrichtungen, die in einem oberen Teil des gegebenen Raums angeordnet sind, und eine oder mehrere zweite Tonerfassungsvorrichtungen, die in einem unteren Teil des gegebenen Raums angeordnet sind, enthält;
wenn der Zurücklegungszustand in dem zweiten Zustand ist, die Betriebssteuereinheit (16) mindestens eine der ersten Tonerfassungsvorrichtungen als eine Fehlertonerfassungsvorrichtung zum Erfassen eines Fehlertons bestimmt, und den Empfang des Tonsignals von mindestens einer der zweiten Tonerfassungsvorrichtungen AUS schaltet; und
die Steuertonerzeugungseinheit (13) das Steuertonsignal erzeugt, entsprechend der Bestimmung.

13. Rauschminderungssystem nach einem der Ansprüche 10 bis 12, wobei die Mehrzahl an Steuertonausgabevorrichtungen (5) eine oder mehrere erste Steuertonausgabevorrichtungen, die in einem oberen Teil des gegebenen Raums angeordnet sind, und eine oder mehrere zweite Steuertonausgabevorrichtungen, die in einem unteren Teil des gegebenen Raums angeordnet sind, enthält;
wenn der Zurücklegungszustand in dem ersten Zustand ist, die Betriebssteuereinheit (16) die Ausgabe des Steuertonsignals zu der einen oder den mehreren ersten Steuertonausgabevorrichtungen AUS schaltet, und die Ausgabe des Steuertonsignals zu der einen oder den mehreren zweiten Steuertonausgabevorrichtungen AN schaltet; und
wenn der Zurücklegungszustand in dem zweiten Zustand ist, die Betriebssteuereinheit (16) die Ausgabe des Steuertonsignals zu der einen oder den mehreren ersten Steuertonausgabevorrichtungen AN schaltet, und die Ausgabe des Steuertonsignals zu der einen oder den mehreren zweiten Steuertonausgabevorrichtungen AUS schaltet.

14. Rauschminderungssteuerverfahren zum Mindern eines Rauschens, das von einer Rauschquelle in einem gegebenen Raum ausgesendet wird, wo ein Schallfeld gebildet werden kann, umfassend:
Empfangen eines Tonsignals von einer Mehrzahl an Tonerfassungsvorrichtungen (7);
Erzeugen eines Steuertonsignals zum Mindern von Rauschen in Bezug auf das empfangene Tonsignal; und
Ausgeben des Steuertonsignals zu einer Mehrzahl an Steuertonausgabevorrichtungen (5);
Erkennen einer Änderung in dem Zustand des Schallfelds; und
Erzeugen des Steuertonsignals auf Grundlage der Änderung des Zustands des Schallfelds;
**gekennzeichnet durch**
Bestimmen der mindestens zwei der Mehrzahl an Tonerfassungsvorrichtungen (7) als entweder eine Rauscherfassungsvorrichtung zum Erfassen des von der Rauschquelle ausgesendeten Rauschens, oder als eine Fehlertonerfassungsvorrichtung zum Erfassen eines Fehlertons, der ein Ergebnis des Überlagerns des Steuertonsignals, das von den Steuertonausgabevorrichtungen (5) ausgesendet wird, auf das Rauschen, das von der Rauschquelle ausgesendet wird, ist, auf Grundlage der Änderung des Zustands des Schallfelds; und
Erzeugen des Steuertonsignals entsprechend der Bestimmung.

## Revendications

1. Dispositif de réduction du bruit pouvant être connecté à une pluralité de dispositifs d'acquisition de son (7) et à une pluralité de dispositifs de sortie de son de commande (5) pour réduire un bruit émis par une source de bruit dans un espace donné où un champ sonore peut être formé, le dispositif de réduction de bruit comprenant :
un récepteur de son (12) pour recevoir un signal sonore provenant d'au moins deux de la pluralité de dispositifs d'acquisition de son (7) ;
une unité de génération de son de commande (13) pour générer un signal sonore de commande pour réduire un bruit en ce qui concerne le signal sonore ; et
un émetteur de son de commande (14) pour délivrer en sortie le signal sonore de commande dans chacun des dispositifs de sortie de son de commande (5) ;
une unité de détection pour détecter un changement d'état du champ sonore ; et
une unité de commande de fonctionnement (16) pour commander la génération du signal sonore de commande par l'unité de génération de son de commande (13) sur la base du changement d'état du champ sonore
**caractérisé en ce que**
l'unité de commande de fonctionnement (16) est configurée pour déterminer les au moins deux de la pluralité de dispositifs d'acquisition de son (7) comme étant l'un parmi un dispositif d'acquisition de bruit pour acquérir le bruit émis par la source de bruit ou un dispositif d'acquisition de son d'erreur pour acquérir un son d'erreur, qui est un résultat d'une superposition du signal sonore de commande émis par les dispositifs de sortie de son de commande (5) sur le bruit émis par la source de bruit, sur la base du changement d'état du champ sonore ; et
l'unité de génération de son de commande (14) est configurée pour générer le signal sonore de commande en fonction de la détermination.

2. Dispositif de réduction de bruit selon la revendication 1, dans lequel l'unité de détection comprend une unité d'acquisition d'informations de siège (17) pour acquérir des informations de siège qui spécifient un état incliné d'un siège (105) disposé dans l'espace donné ; et
l'unité de commande de fonctionnement (16) commande la génération du signal sonore de commande par l'unité de génération de son de commande (14) sur la base des informations de siège.

3. Dispositif de réduction de bruit selon la revendication 1 ou 2, dans lequel
l'unité de détection comprend une unité de détection de changement de son (217) pour détecter un changement du signal sonore reçu par le récepteur de son (12) ; et l'unité de commande de fonctionnement (16) commande la génération du signal sonore de commande par l'unité de génération de son de commande (14) sur la base du changement du signal sonore.

4. Dispositif de réduction de bruit selon la revendication 1, dans lequel
l'unité de génération de son de commande (14) exécute (i) ou (ii) en fonction de la détermination, dans lequel (i) spécifie un signal de bruit en ce qui concerne le signal sonore provenant du dispositif d'acquisition de bruit et génère le signal sonore de commande conformément au signal de bruit, et (ii) effectue un ajustement pour minimiser une erreur entre le signal sonore acquis auprès du dispositif d'acquisition de son d'erreur et le signal sonore de commande généré en (i).

5. Dispositif de réduction de bruit selon l'une quelconque des revendications 1 à 4, dans lequel
l'unité de commande de fonctionnement (16) active ou désactive (ON ou OFF) la réception du signal sonore provenant d'au moins l'un de la pluralité de dispositifs d'acquisition de son (7), en fonction d'un changement d'état du champ sonore.

6. Dispositif de réduction de bruit selon l'une quelconque des revendications 1 à 5, dans lequel
l'unité de commande de fonctionnement (16) active ou désactive la sortie du signal sonore de commande vers au moins l'un de la pluralité de dispositifs de sortie de son de commande (7), en fonction du changement d'état du champ sonore.

7. Dispositif de réduction de bruit selon la revendication 2, dans lequel
l'état incliné comprend un premier état dans lequel un dossier du siège (105) est sensiblement à plat, et un deuxième état dans lequel le dossier est sensiblement vertical.

8. Dispositif de réduction de bruit selon la revendication 7, dans lequel l'état incliné comprend un troisième état dans lequel le dossier du siège (105) s'incline à un angle entre le premier état et le deuxième état.

9. Système de réduction du bruit, comprenant :
le dispositif de réduction de bruit (10) selon l'une quelconque des revendications 1 à 8;
la pluralité de dispositifs d'acquisition de son (7) pouvant être connectés au dispositif de réduction de bruit (10) ; et
la pluralité de dispositifs de sortie de son de commande (5) pouvant être connectés au dispositif de réduction de bruit (10).

10. Système de réduction de bruit selon la revendication 9, dans lequel
l'unité de détection comprend une unité d'acquisition d'informations de siège (17) pour acquérir des informations de siège qui spécifient un état incliné d'un siège (105) ; et l'état incliné comprend un premier état dans lequel un dossier du siège (105) est sensiblement à plat et le deuxième état dans lequel le dossier est sensiblement vertical.

11. Système de réduction de bruit selon la revendication 10, dans lequel
la pluralité de dispositifs d'acquisition de son (7) comprend un ou plusieurs premiers dispositifs d'acquisition de son disposés dans une partie supérieure de l'espace donné, et un ou plusieurs seconds dispositifs d'acquisition de son disposés dans une partie inférieure de l'espace donné ;
lorsque l'état incliné est dans le premier état, l'unité de commande de fonctionnement (16) détermine au moins l'un des premiers dispositifs d'acquisition de son comme étant un dispositif d'acquisition de bruit pour acquérir un bruit, et détermine au moins l'un des seconds dispositifs d'acquisition de son comme étant un dispositif d'acquisition de son d'erreur pour acquérir un son d'erreur ; et
l'unité de génération de son de commande (13) génère le signal sonore de commande en fonction de la détermination.

12. Système de réduction de bruit selon la revendication 10 ou 11, dans lequel
la pluralité de dispositifs d'acquisition de son (7) comprend un ou plusieurs premiers dispositifs d'acquisition de son disposés dans une partie supérieure de l'espace donné, et un ou plusieurs seconds dispositifs d'acquisition de son disposés dans une partie inférieure de l'espace donné ;
lorsque l'état incliné est dans le deuxième état, l'unité de commande de fonctionnement (16) détermine au moins l'un des premiers dispositifs d'acquisition de son comme étant un dispositif d'acquisition de son d'erreur pour acquérir un son d'erreur, et désactive la réception du signal sonore à partir d'au moins l'un des seconds dispositifs d'acquisition de son ; et
l'unité de génération de son de commande (13) génère le signal sonore de commande en fonction de la détermination.

13. Système de réduction de bruit selon l'une quelconque des revendications 10 à 12, dans lequel
la pluralité de dispositifs de sortie de son de commande (5) comprend un ou plusieurs premiers dispositifs de sortie de son de commande disposés dans une partie supérieure de l'espace donné, et un ou plusieurs seconds dispositifs de sortie de son de commande disposés dans une partie inférieure de l'espace donné ;
lorsque l'état incliné est dans le premier état, l'unité de commande de fonctionnement (16) désactive la sortie du signal sonore de commande vers les un ou plusieurs premiers dispositifs de sortie de son de commande, et active la sortie du signal sonore de commande vers les un ou plusieurs seconds dispositifs de sortie de son de commande ; et
lorsque l'état incliné est dans le deuxième état, l'unité de commande de fonctionnement (16) active la sortie du signal sonore de commande vers les un ou plusieurs premiers dispositifs de sortie de son de commande, et désactive la sortie du signal sonore de commande vers les un ou plusieurs seconds dispositifs de sortie de son de commande.

14. Procédé de commande de réduction de bruit pour réduire un bruit émis par une source de bruit dans un espace donné dans lequel un champ sonore peut être formé, comprenant les étapes consistant à :
recevoir un signal sonore provenant d'une pluralité de dispositifs d'acquisition de son (7) ;
générer un signal sonore de commande pour réduire un bruit en ce qui concerne le signal sonore reçu ; et
délivrer en sortie le signal sonore de commande dans une pluralité de dispositifs de sortie de son de commande (5) ;
détecter un changement de l'état du champ sonore ; et
générer le signal sonore de commande sur la base du changement d'état du champ sonore ;
**caractérisé par**
la détermination des au moins deux de la pluralité de dispositifs d'acquisition de son (7) comme étant l'un parmi un dispositif d'acquisition de bruit pour acquérir le bruit émis par la source de bruit ou un dispositif d'acquisition de son d'erreur pour acquérir un son d'erreur, qui est un résultat d'une superposition du signal sonore de commande émis par les dispositifs de sortie de son de commande (5) sur le bruit émis par la source de bruit, sur la base du changement d'état du champ sonore ; et
générer le signal sonore de commande en fonction de la détermination.
